# EUROPEAN PATENT APPLICATION

(11) **EP 4 420 903 A1**
(43) Date of publication of application: **28.08.2024**
(21) Application number: 22883547.6
(22) Date of filing: 18.10.2022
(51) Int. Cl.: B60H 1/00, F24F 13/24

(54) **VEHICULAR AIR-CONDITIONING DEVICE**

(30) Priority: 22.10.2021 JP 2021172891
(71) Applicant: Valeo Japan Co., Ltd., Kumagaya-Shi SAITAMA 360-0193 (JP)
(72) Inventor: UENO, Shota, Kumagaya-shi Saitama 360-0193 (JP)
(74) Representative: Valeo Systèmes Thermiques
(86) International application number: PCT/JP2022/038681
(87) International publication number: WO 2023/068243

(57) **Abstract**

[Object] To provide a vehicular air-conditioning device with improved quietness.

[Solution] A vehicular air-conditioning device (10) includes a butterfly door portion (30) provided in a case (21) to be swingable about a rotary shaft (31). A heater-door flow path (R2) in which part of air that has passed through the evaporator (22) passes when the butterfly door portion (30) is at a temperature conditioned position, is formed between the rotary shaft (31) and the heater (23). The butterfly door portion (30) is provided with a guide part (41) that guides the air flowing in the heater-door flow path (R2), in a predetermined direction.

## Description

### Technical Field

The present invention relates to a vehicular air-conditioning device for controlling the temperature in a vehicle interior.

### Background Art

Vehicular air-conditioning devices are mounted on many vehicles to control the temperature in a vehicle interior. Previously existing technologies related to a vehicular air-conditioning device include a technology disclosed in PTL 1.

The vehicular air-conditioning device disclosed in PTL 1 has an evaporator for cooling air and a heater for heating air provided inside a case. The vehicular air-conditioning device also has an air mix door that is rotatably provided between the evaporator and the heater and is operable to control the amount of air passing through the heater. The upper surface of the air mix door is provided with a guide part to guide the air, flowing along the air mix door, in a predetermined direction.

The vehicular air-conditioning device includes a plurality of outlets facing the vehicle interior. The plurality of outlets include a defroster outlet for blowing out air toward the windshield, a vent outlet for blowing out air toward the upper body of an occupant, and a foot outlet for blowing out air toward the feet of the occupant. Each of the outlets is provided with an opening-closing door that opens and closes the corresponding outlet.

The air mix door can move from a full hot position at which the maximum value of the amount of air passing through the heater is achieved, to the full cool position at which the minimum value of the air passing through the heater is achieved. A position between the full hot position and the full cool position can be referred to as a temperature conditioned position at which part of the air that has passed through the evaporator bypasses the heater. While the air-conditioning device is operating, the air mix door is positioned at any of the full hot position, the full cool position, and the temperature conditioned position.

### Citation List

### Patent Literature

PTL 1: JP2011-51465A

### Summary of Invention

### Technical Problem

Through studies by the inventors on the vehicular air-conditioning device in Patent Literature 1, it has been found that when most or all of air that has passed through the evaporator is blown into the vehicle interior without passing through the heater, the sound generated as a result of the air flowing near the guide part provided to the air mix door is transmitted into the vehicle interior as large noise through the outlets located on the upper side of the vehicle interior, that is, the defroster outlet and the vent outlet.

The quietness in the vehicle interior is desired to be improved for the sake of higher comfortability of occupants.

An object of the present invention is to provide a vehicular air-conditioning device achieving improved quietness.

### Solution to Problem

In the following description, reference signs in the accompanying drawings are appended in parentheses to facilitate understanding of the present invention, but the present invention is not limited to the illustrated embodiment.

The present invention provides a vehicular air-conditioning device comprising a case (21, 21C) into which air is able to flow, the case accommodating: an evaporator (22) capable of cooling air; a heater (23) capable of heating air that has passed through the evaporator (22); and an air mix door (24, 24A) capable of controlling a ratio between air passing through the heater (23) and air bypassing the heater (23), wherein
the air mix door (24, 24A) includes a butterfly door portion (30) including: a rotary shaft (31) that is rotatably provided to the case (21, 21C), and extends substantially orthogonal to a flow direction of the air bypassing the heater (23); a first closing plate (32) that extends from the rotary shaft (31) and is movable on an upstream of the rotary shaft (31) ; and a second closing plate (33) that extends from the rotary shaft (31) in a direction substantially opposite to the first closing plate (32),
the butterfly door portion (30) is controlled to be positioned at any one of a full cool position at which a maximum value of the ratio of the air bypassing the heater (23) is achieved, a full hot position at which a maximum value of the ratio of the air passing through the heater (23) is achieved, and a temperature conditioned position that is a position, between the full cool position and the full hot position, at which part of the air that has passed through the evaporator (22) bypasses the heater (23),
a heater-door flow path (R2) in which part of the air that has passed through the evaporator (22) passes when the butterfly door portion (30) is at the temperature conditioned position, is formed between the rotary shaft (31) and the heater (23), and
the butterfly door portion (30) is provided with a guide part (41) that guides air flowing in the heater-door flow path (R2), in a predetermined direction.

### Advantageous Effects of Invention

The present invention can provide a vehicular air-conditioning device achieving improved quietness.

### Brief Description of Drawings

[FIG. 1] FIG. 1 is a rear view of a vehicular air-conditioning device according to Example 1.
[FIG. 2] FIG. 2 is a cross-sectional view of a vehicular air-conditioning device illustrated in FIG. 1 as viewed from the side.
[FIG. 3] FIG. 3 is a cross-sectional view that is taken along line 3-3 in FIG. 2.
[FIG. 4] 4A is a diagram illustrating the vehicular air-conditioning device in a fully cool state. 4B is a diagram illustrating the vehicular air-conditioning device in a temperature conditioned state. 4C is a diagram illustrating the vehicular air-conditioning device in a fully hot state.
[FIG. 5] FIG. 5 is a bottom view of a butterfly door portion illustrated in FIG. 3.
[FIG. 6] 6A is a diagram illustrating a first modification of the butterfly door portion. 6B is a diagram illustrating a second modification of the butterfly door portion. 6C is a diagram illustrating a third modification of the butterfly door portion. 6D is a diagram illustrating a fourth modification of the butterfly door portion.
[FIG. 7] FIG. 7 is a cross-sectional view of a vehicular air-conditioning device according to Example 2 as viewed from the side.
[FIG. 8] FIG. 8 is a cross-sectional view of a vehicular air-conditioning device according to Example 3 as viewed from the side.
[FIG. 9] FIG. 9 is a cross-sectional view of a vehicular air-conditioning device according to Example 4 as viewed from the side.
[FIG. 10] FIG. 10 is a cross-sectional view of a vehicular air-conditioning device according to Example 5 as viewed from the side.
[FIG. 11] FIG. 11 is a cross-sectional view of a vehicular air-conditioning device according to Example 6 as viewed from the side.

### Description of Embodiments

Embodiments of the present invention will be described below based on the accompanying drawings. In the description, front and rear refer to front and rear with reference to a direction in which a vehicle travels, and left and right refer to left and right with reference to an occupant in the vehicle. In the figures, Fr indicates front, Rr indicates rear, Le indicates left, Ri indicates right, Up indicates up, and Dn indicates down.

### Example 1

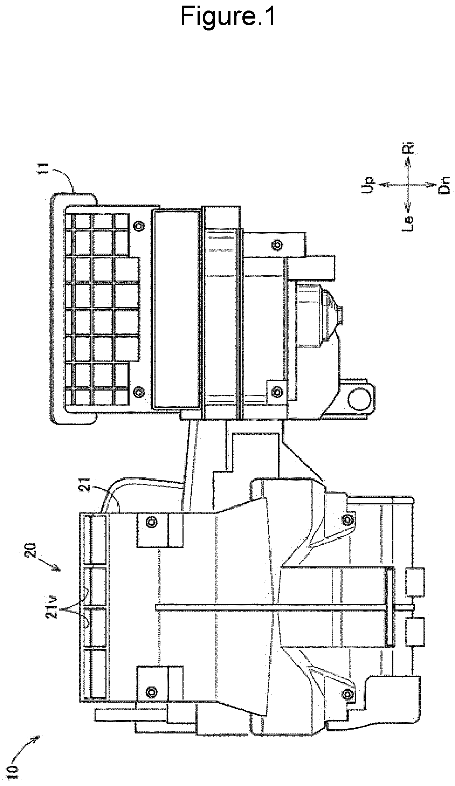

Reference is made to FIG. 1. A vehicular air-conditioning device 10 (hereinafter abbreviated as "air-conditioning device 10") is disposed in a front part of a vehicle interior to extend in the left and right direction. The air-conditioning device 10 includes a blower portion 11 that can take in air from the vehicle interior and/or outside the vehicle to blow air, and a temperature control portion 20 that can control the temperature of the blowing air delivered from the blower portion 11 to a predetermined temperature.

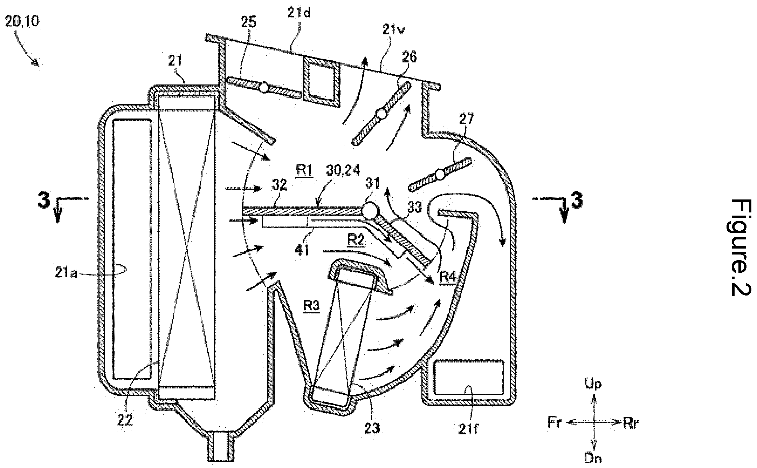

Reference is made to FIG. 2. The temperature control portion 20 includes a case 21 into which air can flow. The case 21 accommodates an evaporator 22 capable of cooling air, a heater 23 capable of heating air that has passed through the evaporator 22, and an air mix door 24 capable of controlling the ratio between air passing through the heater 23 and air bypassing the heater 23.

Further, in the case 21, an inlet 21a through which the air delivered from the blower portion 11 (FIG. 1) is introduced, a defroster outlet 21d for blowing out air toward the windshield, a vent outlet 21v for blowing out air toward the upper body of an occupant, and a foot outlet 21f for blowing out air toward the feet of the occupant are formed.

Further, the case 21 accommodates a first shutter 25 that is movably provided to open and close the defroster outlet 21d, a second shutter 26 that is movably provided to open and close the vent outlet 21v, and a third shutter 27 that is movably provided to open and close the foot outlet 21f.

Inside the case 21, a plurality of flow paths in which the air that has passed through the evaporator 22 flows are formed. A flow path that extends to pass through the evaporator 22 and is directly led to the outlets 21d, 21v, and 21f is referred to as a cold air flow path R1, a flow path that extends to pass through a space between the air mix door 24 and the upper part of the heater 23 is referred to as a heater-door flow path R2, a flow path that extends to pass through the heater 23 is referred to as a hot air flow path R3, and a flow path that is located on the downstream of the heater-door flow path R2 and the hot air flow path R3 to pass blowing air with cold air and hot air mixed is referred to as a mix flow path R4.

Note that, in the cold air flow path R1, a region near the second shutter 26 or the third shutter 27 may serve as a second mix flow path as a region where the air that has passed through the mix flow path R4 is mixed.

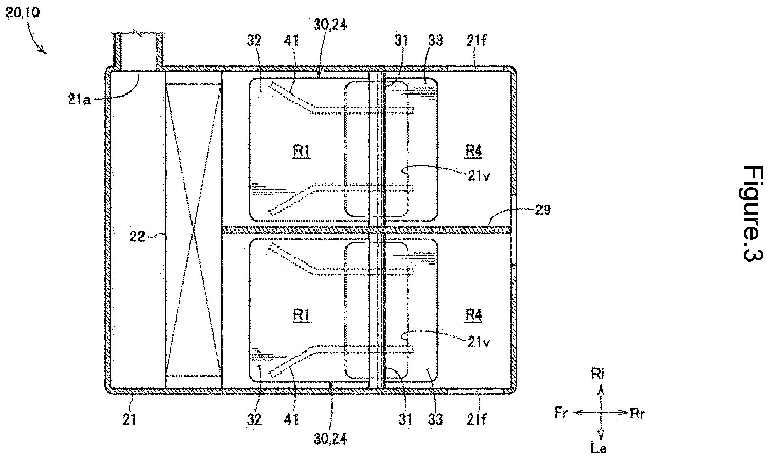

Reference is made to FIG. 3. The interior of the case 21 is partitioned by a partition wall 29, into two left and right rooms. These two rooms are respectively provided with the air mix doors 24 and 24. With the interior of the case 21 delimited into the two rooms respectively provided with the air mix doors 24 and 24, air flows at different temperatures can be respectively provided to occupants on the driver's seat and the passenger seat, for example.

The interior of the case 21 does not necessarily need to be delimited. The interior of the case 21 may be delimited into three or more rooms. In the case of delimiting into three or more rooms, air flows at different temperatures can not only be provided on left and right sides but can also be provided on upper and lower sides.

Reference is made to FIG. 2. One evaporator 22 is provided so as to be substantially orthogonal to the direction of air flow (direction from left to right in the drawing). A refrigerant flows through the evaporator 22, and air passing through the evaporator 22 is cooled by heat exchange with the refrigerant.

As the heater 23, a hot water heater in which hot water flows or an electric heater that generates heat by energization may be used. Alternatively, both the hot water heater and the electric heater can be used as the heater 23.

The air mix door 24 is formed by the butterfly door portion 30. Thus, in the air-conditioning device 10 illustrated in FIG. 2, the air mix door 24 can be regarded as indicating the butterfly door portion 30.

The butterfly door portion 30 includes a rotary shaft 31 that extends in the left and right direction with respect to air flowing in the front and rear direction and is provided above the heater 23, a first closing plate 32 that extends from the rotary shaft 31 toward the upstream of the heater 23 and is capable of controlling the flow rate of air passing through the heater 23, and a second closing plate 33 that extends from the rotary shaft 31 toward the downstream of the heater 23 and is capable of controlling the flow rate of air passing through the heater 23. The butterfly door portion 30 has a substantially V shape with an obtuse angle, with the first closing plate 32 and the second closing plate 33 respectively extending in different directions from the rotary shaft 31.

A guide part 41 that guides the flow direction of air is continuously provided from a surface of the first closing plate 32 facing the heater 23 to a surface of the second closing plate 33 facing the heater 23. The guide part 41 is capable of guiding air flowing in the heater-door flow path R2, in a predetermined direction.

The rotary shaft 31 is rotated by the motor, for example, in response to the control unit energizing the motor. The control unit energizes the motor so that the position of the butterfly door portion 30 is controlled based on the set temperature and the like.

When the first closing plate 32 is oriented in a direction substantially orthogonal to the evaporator 22, the second closing plate 33 extends from the rotary shaft 31 in a direction away from the vent outlet 21v.

The guide part 41 is formed by a rib integrally raised from the butterfly door portion 30. The guide part 41 preferably has a length equal to or greater than a half of the entire length of the first closing plate 32 and/or preferably has a length equal to or greater than a half of the entire length of the second closing plate 33. This is to guide air smoothly and reliably.

Further, the guide part 41 preferably has a height equal to or less than a half of the length from the rotary shaft 31 to the heater 23. This is because a smooth air flow can be ensured by preventing the heater-door flow path R2 from being blocked by the guide part 41 and securing a large area for a flow path.

Reference is made to FIG. 3. Two guide parts 41 and 41 are provided to each of the butterfly door portions 30 and 30. The two guide parts 41 extend in the front and rear direction so as to face each other, gradually narrow from an end on the upstream toward the downstream, and extend substantially parallel to each other at some midpoint.

Incidentally, the guide part 41 may be formed only in any one of the first closing plate 32 and the second closing plate 33.

The defroster outlet 21d and the vent outlet 21v are formed in an upper part of the case 21, and the foot outlet 21f is formed in a lower part of the case 21. Each of the outlets 21d, 21v, and 21f may be configured to directly face the vehicle interior or to deliver air into the vehicle interior via a duct or the like.

For example, the first to the third shutters 25 to 27 are operated by a motor. A control unit connected to the motor energizes the motor in accordance with a set temperature and the like, and controls open/close of the first to the third shutters 25 to 27, and the opening degree for a case where the first to the third shutters 25 to 27 are open.

The description is given of an operation of the air-conditioning device 10 described above.

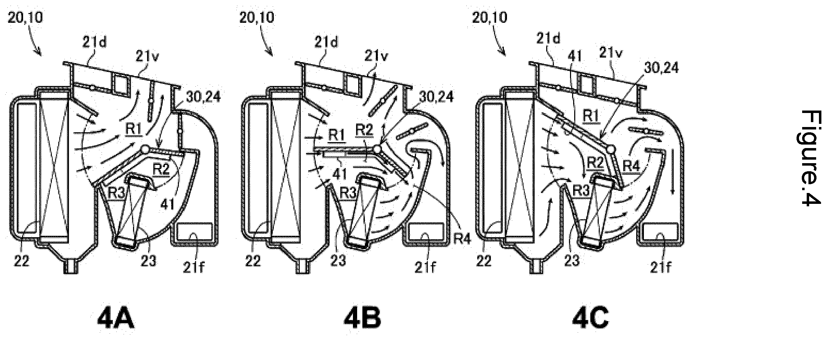

Reference is made to FIG. 4. 4A illustrates the air-conditioning device 10 in a state where the heater-door flow path R2 and the hot air flow path R3 are closed. In this state, air that has passed through the evaporator 22 flows toward the vent outlet 21v without passing through the heater 23. In other words, in the state illustrated in 4A, the maximum value of the ratio of the air bypassing the heater 23 is achieved. This state is called a fully cool state and the position of the butterfly door portion 30 in the fully cool state is called a full cool position.

In the fully cool state, for example, the vent outlet 21v is fully open and the defroster outlet 21d and the foot outlet 21f are fully closed. In this case, all of the air that has passed through the evaporator 22 is blown out from the vent outlet 21v to the vehicle interior. Air passing through the vent outlet 21v is blown out toward the upper body of an occupant.

4B illustrates the air-conditioning device 10 in a state where the cold air flow path R1, the heater-door flow path R2, and the hot air flow path R3 are open. In this state, the air that has passed through the evaporator 22 passes through each of the cold air flow path R1, the heater-door flow path R2, and the hot air flow path R3 to flow toward the vent outlet 21v or the foot outlet 21f. In other words, in the state illustrated in 4B, the temperature is controlled based on the ratio between air that has passed through the evaporator 22 only and air that has passed through the heater 23. This state is called a temperature conditioned state, and the position of the butterfly door portion 30 in the temperature conditioned state is called a temperature conditioned position.

In the temperature conditioned state, for example, the vent outlet 21v and the foot outlet 21f are half open and the defroster outlet 21d is fully closed. In this case, most of the air that has passed through the evaporator 22 and flows on the upper surface side of the first closing plate 32 of the air mix door 24 is blown out from the vent outlet 21v to the vehicle interior. Air passing through the vent outlet 21v is blown out toward the upper body of an occupant.

In the temperature conditioned state, part of the air that has passed through the evaporator 22 passes through the cold air flow path R1, and flows toward the outlets 21d, 21v, and 21f. Further, the residual of the air that has passed through the evaporator 22 passes through the heater-door flow path R2 or the hot air flow path R3. The air heated by the heater 23 as the air passes through the hot air flow path R3 is mixed, in the mix flow path R4, with cold air that has passed through the heater-door flow path R2, to have the temperature lowered. The air that has passed through the mix flow path R4 is mixed, in the vicinity of the vent outlet 21v and the foot outlet 21f (second mix flow path), with cold air that has passed through the cold air flow path R1, to have the temperature further lowered, and the resultant air is blown out from the vent outlet 21v and the foot outlet 21f.

Mixing the air that has passed through the cold air flow path R1 and the air that has passed through the mix flow path R4 is controlled. While, the temperature of the hot air is lowered, a moderate temperature difference is provided between the air blown out from the vent outlet 21v and the air blown out from the foot outlet 21f. As compared with the air blown out from the vent outlet 21v, the air blown out from the foot outlet 21f has a high temperature.

Rotating the butterfly door portion 30 controls the ratio between the air passing through the heater 23 and the air bypassing the heater 23. Reducing the ratio of the air passing through the heater 23 lowers the temperature of the air blown out to the vehicle interior. Increasing the ratio of the air passing through the heater 23 raises the temperature of the air blown out to the vehicle interior.

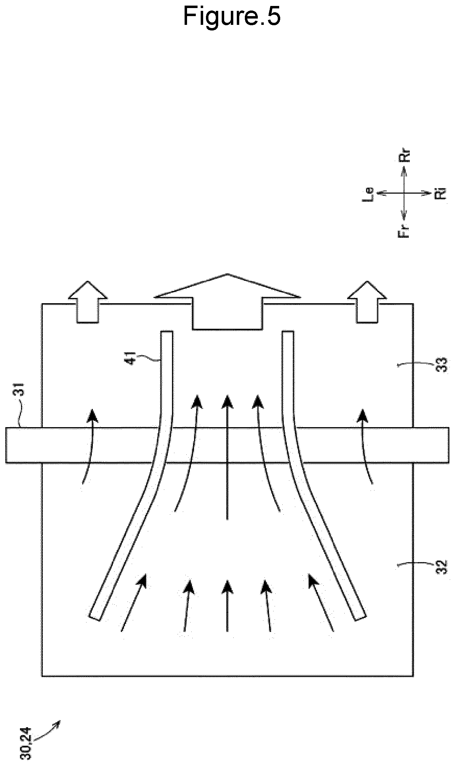

Reference is also made to FIG. 5. A surface of the butterfly door portion 30 facing the heater 23 is provided with the guide part 41. The guide part 41 guides air passing through the heater-door flow path R2, to a location to be passed. Thus, a larger or a smaller amount of air can flow to a predetermined position in the width direction.

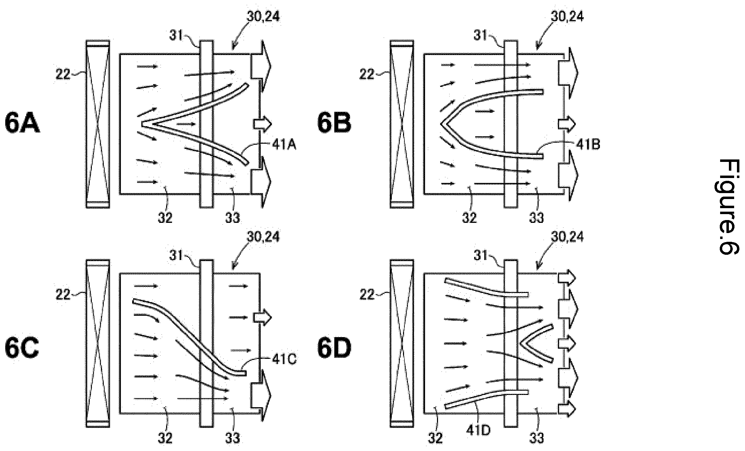

Reference is made to FIG. 6. The shape of guide parts 41A to 41D may be selected from various shapes in accordance with a location where air is to be guided. The shape may be a V shape with the vertex on the upstream side as illustrated in 6A and 6B, one rib may be inclined with respect to the flow direction of air as illustrated in 6C, or three or more ribs may be used as illustrated in 6D. These shapes may be combined as appropriate.

Reference is made to 4C in FIG. 4. 4C illustrates the air-conditioning device 10 in a state where the cold air flow path R1 is closed. In this state, all of the air that has passed through the evaporator 22 passes through the heater 23. In other words, in the state illustrated in 4C, the maximum value of the ratio of air passing through the heater 23 is achieved. This state is called a fully hot state and the position of the butterfly door portion 30 in the fully hot state is called a full hot position.

In the fully hot state, for example, the foot outlet 21f is fully open and the defroster outlet 21d and the vent outlet 21v are fully closed. In this case, all of the air that has passed through the evaporator 22 and the heater 23 is blown out from the foot outlet 21f to the vehicle interior. Air passing through the foot outlet 21f is blown out toward the feet of an occupant.

In the states illustrated in 4A to 4C, the opening and closing of the outlets 21v, 21f, and 21d can be appropriately changed. For example, in the fully hot state, it is acceptable that air be blown out from the defroster outlet 21d and the foot outlet 21f.

The air-conditioning device 10 described above is summarized below.

Reference is made to FIG. 2. The air-conditioning device 10 includes the case 21 into which air can flow. The case 21 accommodates the evaporator 22 capable of cooling air, the heater 23 capable of heating air that has passed through the evaporator 22, and the air mix door 24 capable of controlling the ratio between air passing through the heater 23 and air bypassing the heater 23. The air mix door 24 includes the butterfly door portion 30 including: the rotary shaft 31 that is rotatably provided to the case 21, and extends substantially orthogonal to the flow direction of the air bypassing the heater 23; the first closing plate 32 that extends from the rotary shaft 31 and is movable on the upstream of the rotary shaft 31; and the second closing plate 33 that extends from the rotary shaft 31 in a direction substantially opposite to the first closing plate 32. The butterfly door portion 30 is controlled to be positioned at any one of the full cool position at which the maximum value of the ratio of the air bypassing the heater 23 is achieved (see FIG. 4A), the full hot position at which the maximum value of the ratio of the air passing through the heater 23 is achieved (see FIG. 4C), and the temperature conditioned position that is a position, between the full cool position and the full hot position, at which part of the air that has passed through the evaporator 22 bypasses the heater 23.

The heater-door flow path R2 in which part of the air that has passed through the evaporator 22 passes when the butterfly door portion 30 is at the temperature conditioned position, is formed between the rotary shaft 31 and the heater 23. The butterfly door portion 30 is provided with the guide part 41 that guides the air flowing in the heater-door flow path R2, in a predetermined direction.

The butterfly door portion 30 is provided with the guide part 41 that guides the air flowing in the heater-door flow path R2, in a predetermined direction. Thus, for guiding the cold air bypassing the heater 23 in a predetermined direction, the surface facing the heater can also be used, instead of using only the surface of the butterfly door portion 30 away from the heater (the surface opposite to the surface facing the heater) as in previously existing configurations. Through studies, the inventors have found that noise is likely to be produced especially when the air mix door 24 is at the full cool position, when the guide part is provided to the surface of the butterfly door portion 30 away from the heater as in previously existing configurations and a surface facing the outlets positioned in an upper part of the vehicle interior, that is, the defroster outlet 21d and the vent outlet 21v. Supposedly, the noise is produced as a result of a large amount of air passing through the guide part, and transmitted to the vehicle interior through the outlets positioned in an upper part of the vehicle interior. In view of this, part of the guide parts is relocated to the surface facing the heater 23, or the guide parts 41 are formed only on the surface facing the heater 23, so that the noise during the fully cool state involving a large amount of blown air can be reduced, whereby improved quietness in the vehicle interior can be achieved.

Generally, the butterfly door portion 30 is frequently at the temperature conditioned state, while the air-conditioning device 10 is operating. With the guide part 41 provided to face the heater-door flow path R2, while the butterfly door portion 30 is at the temperature conditioned state, the occupant feels less noise, since the first closing plate 32 and/or the second closing plate 33 blocks the soundwaves traveling straight, that is, the noise produced by the air passing through the guide part 41 and then traveling toward the outlets (the defroster outlet 21d and the vent outlet 21v) positioned above the guide part 41.

Thus, in the fully cool state, the air blown does not pass through the guide part 41, and in the temperature conditioned state, even when noise is generated in the guide part 41, it is possible to suppress the transmission of the sound to the outlets positioned above the guide part 41, whereby the sound environment can be improved for the occupant.

In the fully hot state, the air mix door 24 can block the flow of air to directly flow toward the vent outlet 21v after passing through the evaporator 22. Thus, even when the air blown in the fully hot state is blown out from the vent outlet 21v, the quietness in the vehicle interior can be guaranteed.

The guide part 41 is formed by a rib raised from the butterfly door portion 30. The air can be sent in any direction, while suppressing an increase in ventilation resistance.

The guide part 41 is at least provided to the first closing plate 32. Thus, the air that has passed through the evaporator 22 can be started to be guided on the upstream of the rotary shaft 31, and thus can be efficiently guided in a predetermined direction.

The guide part 41 is at least provided to the second closing plate 33. The air that has passed through the evaporator 22 can be guided toward the downstream of the rotary shaft 31, and thus can be reliably guided in a predetermined direction.

The guide part 41 guides the air toward the vent outlet 21v. In many cases, the temperature of the air blown out from the vent outlet 21v is adjusted to be relatively lower than the temperature of the air blown out from the foot outlet 21f. The air cooled while passing through the evaporator 22 can be guided to the vent outlet 21v, whereby the occupant can enjoy improved comfort.

The air mix door 24 is formed by the butterfly door portion 30. The air mix door 24 can be formed with a small number of components. With the component cost thus made low, the cost of the vehicular air-conditioning device as a whole can be made low.

### Example 2

Next, an air-conditioning device 10A according to Example 2 is described based on the drawings.

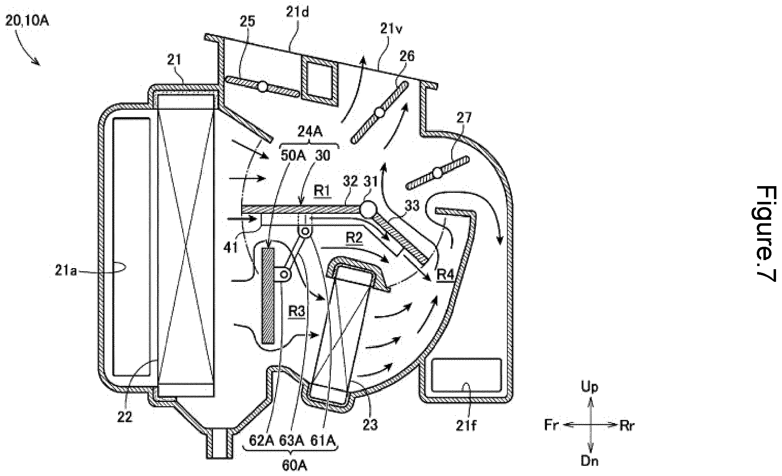

FIG. 7 illustrates a cross-sectional structure of the air-conditioning device 10A according to Example 2 and corresponds to FIG. 2. As for parts in common with the air-conditioning device 10 (see FIG. 2) according to Example 1, the same reference numerals are used and the detailed descriptions are omitted.

In the air-conditioning device 10A according to Example 2, an air mix door 24A having a configuration different from that of the air-conditioning device 10 (see FIG. 2) according to Example 1 is used. The other configurations are the same as those of the air-conditioning device 10 according to Example 1.

The air mix door 24A includes the butterfly door portion 30 and a driven door portion 50A. The driven door portion 50A is connected to the first closing plate 32 via a link 60A, and is driven when the butterfly door portion 30 is driven.

For example, the driven door portion 50A can be moved along a predetermined route, by a rib, groove, or the like formed along a wall surface of the case 21.

The link 60A includes a driving side fixed portion 61A fixed to the butterfly door portion 30, a driven side fixed portion 62A fixed to the driven door portion 50A, and a link shaft 63A that is a shaft-shaped member bridging between the driving side fixed portion 61A and the driven side fixed portion 62A.

The link shaft 63A has both ends respectively supported by the driving side fixed portion 61A and the driven side fixed portion 62A to be rotatable.

The air-conditioning device 10A described above also produces a predetermined effect of the present invention.

The air mix door 24A is formed to include the butterfly door portion 30 and the driven door portion 50A. The driven door portion 50A is connected to the first closing plate 32 via a link 60A, and is driven when the butterfly door portion 30 is driven. With the driven door portion 50A provided, the air mix door 24A as a whole can move in a more complex manner. The air mix door 24A movable within a smaller space contributes to downsizing of the vehicular air-conditioning device as a whole.

### Example 3

Next, an air-conditioning device 10B according to Example 3 is described based on the drawings.

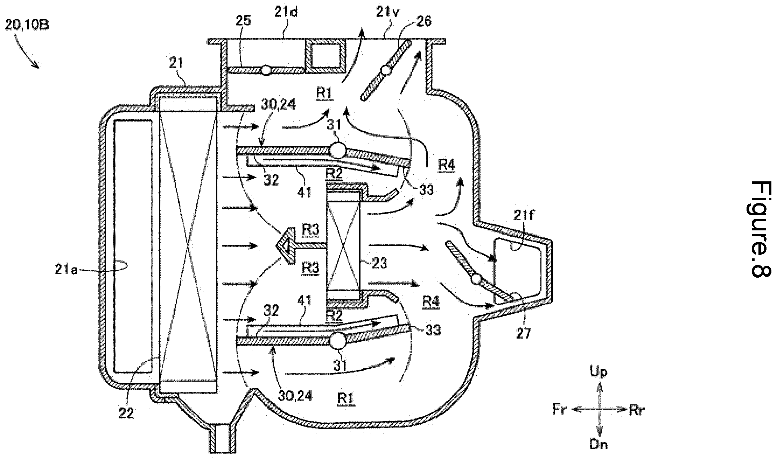

FIG. 8 illustrates a cross-sectional structure of the air-conditioning device 10B according to Example 3 and corresponds to FIG. 2. As for parts in common with the air-conditioning device according to Example 1 or Example 2, the same reference numerals are used and the detailed descriptions are omitted.

The air-conditioning device 10B includes two air mix doors 24 and 24 that are so provided as to sandwich the heater 23 from above and below. The guide parts 41 and 41 are provided to the respective butterfly door portions 30 and 30 to face the heater-door flow paths R2 and R2.

The air-conditioning device 10B described above also produces a predetermined effect of the present invention.

In the air-conditioning device 10B, the mix door 24 on the lower side of a heater core 23 has a rib 41, on the first closing plate 32 and the second closing plate 33, rising toward the upper side of the case 21 where the defroster outlet 21d and the vent outlet 21v are provided. Thus, the mix door 24 on the lower side at the full hot position or the temperature conditioned position leads to straight traveling of the sound generated by the rib 41 toward the upper side of the case 21. Still, the heater 23 and the upper side mix door 24 are disposed between the lower mix door 24 and the upper side outlet of the case 21 to inhibit the straight traveling of the noise, and thus no increase in noise occurs.

### Example 4

Next, an air-conditioning device 10C according to Example 4 is described based on the drawings.

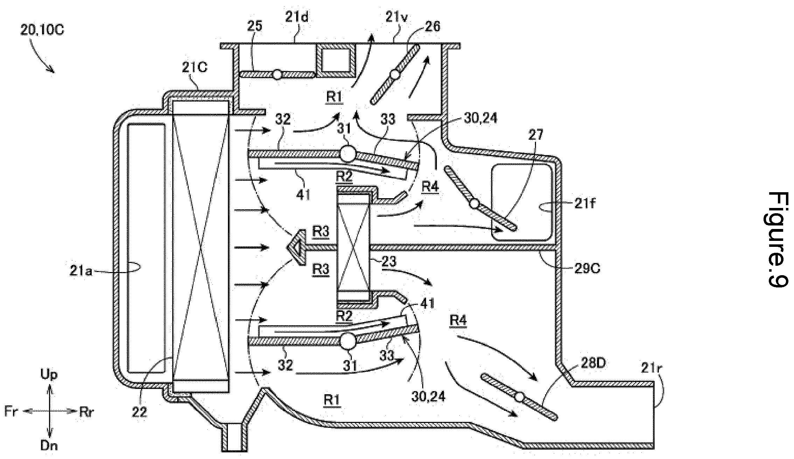

FIG. 9 illustrates a cross-sectional structure of the air-conditioning device 10C according to Example 4 and corresponds to FIG. 2. As for parts in common with the air-conditioning device according to any of Example 1 to Example 3, the same reference numerals are used and the detailed descriptions are omitted.

A case 21C for the air-conditioning device 10C is provided with a partition wall 29C that delimits the interior of the case 21C in the up and down direction and extends in the front and rear direction.

Further, the air-conditioning device 10C includes two air mix doors 24 and 24 that are so provided as to sandwich the heater 23 from above and below. The guide parts 41 and 41 are provided to the respective butterfly door portions 30 and 30 to face the heater-door flow paths R2 and R2.

In the bottom room resulting from the delimitation by the partition wall 29C, a rear air outlet 21r for blowing air toward a rear part of the vehicle interior is formed. Air blown out from the rear air outlet 21r is guided to the rear seat, for example, via a duct.

A fourth shutter 28D that can open and close the rear air outlet 21r is provided at a position to face the rear air outlet 21r.

The air-conditioning device 10C described above also produces a predetermined effect of the present invention.

Further, according to the air-conditioning device 10C, it is possible to blow air having different temperatures to each of occupants (four occupants) sitting left and right in front seats and rear seats.

### Example 5

Next, an air-conditioning device 10D according to Example 5 is described based on the drawings.

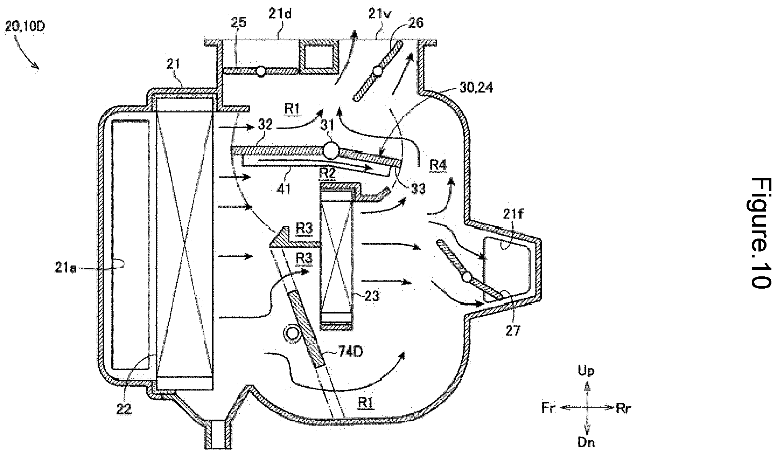

FIG. 10 illustrates a cross-sectional structure of the air-conditioning device 10D according to Example 5 and corresponds to FIG. 2. As for parts in common with the air-conditioning device according to any of Example 1 to Example 4, the same reference numerals are used and the detailed descriptions are omitted.

The air-conditioning device 10D includes one air mix door 24 and one air mix shutter 74D inside the case 21.

The air mix shutter 74D is provided so as to be movable linearly from the cold air flow path R1 to the hot air flow path R3. As with the air mix door 24, the air mix shutter 74D can control the ratio between the air passing through the heater 23 and the air bypassing the heater 23.

The air-conditioning device 10D described above also produces a predetermined effect of the present invention.

### Example 6

Next, an air-conditioning device 10E according to Example 6 is described based on the drawings.

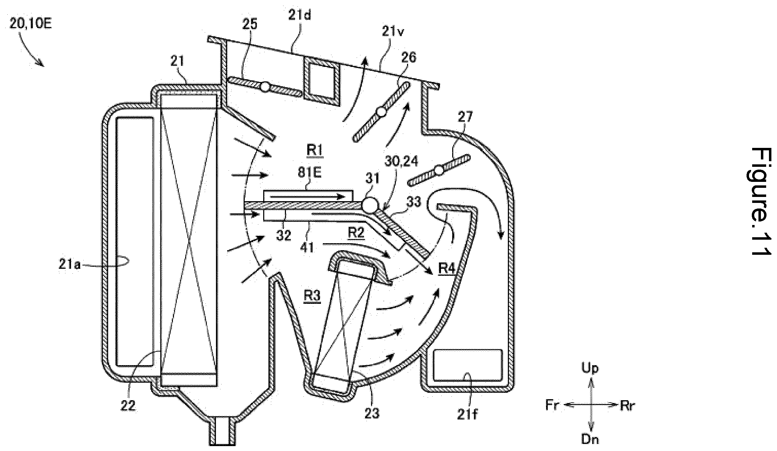

FIG. 11 illustrates a cross-sectional structure of the air-conditioning device 10E according to Example 6 and corresponds to FIG. 2. As for parts in common with the air-conditioning device according to any of Example 1 to Example 5, the same reference numerals are used and the detailed descriptions are omitted.

The air-conditioning device 10E has a second guide part 81E on a surface of the air mix door 24 facing the cold air flow path R1. The second guide part 81E guides the air that has passed through the evaporator 22 in a predetermined direction.

For example, the second guide part 81E is formed to be sufficiently shorter and/or sufficiently lower than the guide part 41, and thus is set in such a manner that the noise is not generated or is less likely to be generated when the butterfly door portion 30 is at the full cool position.

Thus, also in the air-conditioning device 10E according to the present invention, it is acceptable that the second guide part 81E be provided in the cold air flow path R1, as long as no large noise is generated.

The air-conditioning device 10E described above also produces a predetermined effect of the present invention.

The air-conditioning device according to the present invention is also applicable to an air-conditioning device in the form of a combination of the examples, and is not limited to the examples. For example, each of the air-conditioning devices described with reference to FIG. 8 to FIG, 10 may be provided with the driven door. The air-conditioning devices described with reference to FIG. 1 to FIG. 10 may be provided with the second guide part set to not generate noise.

The present invention is not limited to the examples as long as operations and effects of the present invention are achieved.

### Industrial Applicability

The air-conditioning device according to the present invention is suitable to be mounted to a passenger vehicle.

### Reference Signs List

10, 10A, 10B, 10C, 10D, 10E: Vehicular air-conditioning device
21, 21C: Case, 21v: Vent outlet, 21f: Foot outlet
22: Evaporator
23: Heater
24, 24A: Air mix door
30: Butterfly door portion
31: Rotary shaft
32: First closing plate
33: Second closing plate
41: Guide part
50A: Driven door portion
60A: Link
R2: Heater-door flow path

## Claims

1. An vehicular air-conditioning device comprising a case (21, 21C) into which air is able to flow, the case accommodating: an evaporator (22) capable of cooling air; a heater (23) capable of heating air that has passed through the evaporator (22); and an air mix door (24, 24A) capable of controlling a ratio between air passing through the heater (23) and air bypassing the heater (23), wherein
the air mix door (24, 24A) includes a butterfly door portion (30) including: a rotary shaft (31) that is rotatably provided to the case (21, 21C), and extends substantially orthogonal to a flow direction of the air bypassing the heater (23); a first closing plate (32) that extends from the rotary shaft (31) and is movable on an upstream of the rotary shaft (31) ; and a second closing plate (33) that extends from the rotary shaft (31) in a direction substantially opposite to the first closing plate (32),
the butterfly door portion (30) is controlled to be positioned at any one of a full cool position at which a maximum value of the ratio of the air bypassing the heater (23) is achieved, a full hot position at which a maximum value of the ratio of the air passing through the heater (23) is achieved, and a temperature conditioned position that is a position, between the full cool position and the full hot position, at which part of the air that has passed through the evaporator (22) bypasses the heater (23),
a heater-door flow path (R2) in which part of the air that has passed through the evaporator (22) passes when the butterfly door portion (30) is at the temperature conditioned position, is formed between the rotary shaft (31) and the heater (23), and
the butterfly door portion (30) is provided with a guide part (41) that guides air flowing in the heater-door flow path (R2), in a predetermined direction.

2. The vehicular air-conditioning device according to claim 1, wherein the guide part (41) is formed by a rib raised from the butterfly door portion (30).

3. The vehicular air-conditioning device according to claim 2, wherein the guide part (41) is at least provided to the first closing plate (32).

4. The vehicular air-conditioning device according to claim 2 or 3, wherein the guide part (41) is at least provided to the second closing plate (33).

5. The vehicular air-conditioning device according to any one of claims 1 to 4, wherein
on the case (21, 21C), a vent outlet (21v) through which air is blown toward upper body of an occupant and a foot outlet (21f) through which air is blown toward feet of the occupant are formed, and
the guide part (41) guides the air toward the vent outlet (21v).

6. The vehicular air-conditioning device according to any one of claims 1 to 5, wherein the air mix door (24) is formed by the butterfly door portion (30).

7. The vehicular air-conditioning device according to any one of claims 1 to 5, wherein
the air mix door (24A) is formed to include the butterfly door portion (30) and a driven door portion (50A), and
the driven door portion (50A) is connected to the butterfly door portion (30) via a link (60A), and is driven when the butterfly door portion (30) is driven.
